(19) Europäisches Patentamt
European Patent Office
Office européen des brevets

(11) EP 4 124 532 A2

(12) EUROPEAN PATENT APPLICATION

(43) Date of publication:
01.02.2023 Bulletin 2023/05

(21) Application number: 22186951.4

(22) Date of filing: 26.07.2022

(51) International Patent Classification (IPC):
B60W 50/10 (2012.01)    B60W 60/00 (2020.01)
B60W 30/18 (2012.01)

(52) Cooperative Patent Classification (CPC):
B60W 50/10; B60W 30/18154; B60W 30/18163;
B60W 60/0011; B60W 60/0013; B60W 2540/21;
B60W 2556/45; B60W 2556/55; B60W 2720/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.07.2021  CN 202110860574

(71) Applicant: Apollo Intelligent Driving Technology
(Beijing) Co., Ltd.
Haidian District
Beijing 100085 (CN)

(72) Inventors:
• YU, Ning
Beijing (CN)
• PAN, An
Beijing (CN)
• LI, Yongchen
Beijing (CN)
• XIONG, Hao
Beijing (CN)

(74) Representative: Isarpatent
Patent- und Rechtsanwälte Barth
Charles Hassa Peckmann & Partner mbB
Friedrichstrasse 31
80801 München (DE)

(54) **CONTROL METHOD, APPARATUS, DEVICE, AND MEDIUM FOR AUTONOMOUS DRIVING VEHICLE**

(57)    The present disclosure provides a control method, an apparatus, a device, and a medium for an autonomous driving vehicle, and relates to the technical field of artificial intelligence, and in particular, to autonomous driving and machine learning. The method includes: obtaining perception information of road conditions around a vehicle; determining a first control decision based on the perception information and autonomous driving decision logic; controlling the vehicle to perform autonomous driving according to the first control decision; determining, in response to detecting an assisted driving instruction, a second control decision that is different from the first control decision based on the perception information, the autonomous driving decision logic, and the assisted driving instruction; and controlling the vehicle to perform autonomous driving according to the second control decision.

Fig. 2

## Description

## TECHNICAL FIELD

The present disclosure relates to the technical field of artificial intelligence, in particular, to autonomous driving and machine learning technologies, and specifically to a control method and apparatus for autonomous driving, an update method and apparatus for autonomous driving decision logic, an electronic device, a computer-readable storage medium, and a computer program product.

## BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, and machine learning/deep learning, big data processing technologies, and knowledge graph technologies.

With the rapid development of the field of autonomous driving, intelligence and autonomy of autonomous driving are increasingly improved, and scenarios in which it can be applied are becoming more and more abundant. However, for vehicles with high priority for safety, such as buses, there are still specific cases that require safety officers to intervene in traveling statuses of such vehicles.

The method described in this section is not necessarily a method that has been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

## SUMMARY

The present disclosure provides a control method and apparatus for autonomous driving, an update method and apparatus for autonomous driving decision logic, an electronic device, a computer-readable storage medium, and a computer program product.

According to an aspect of the present disclosure, a computer-implemented control method for autonomous driving is provided, the method including: obtaining perception information of road conditions around a vehicle; determining a first control decision based on the perception information and autonomous driving decision logic; controlling the vehicle to perform autonomous driving according to the first control decision; determining, in response to detecting an assisted driving instruction, a second control decision that is different from the first control decision based on the perception information, the autonomous driving decision logic, and the assisted driving instruction; and controlling the vehicle to perform autonomous driving according to the second control decision.

According to another aspect of the present disclosure, a computer-implemented update method for autonomous driving decision logic is provided, the method including: receiving at least one group of information from at least one vehicle, respectively, where each group of information includes perception information and a control decision of a corresponding vehicle, where the control decision in each group of information is determined by an autonomous driving system of a corresponding vehicle in response to detecting an assisted driving instruction; updating autonomous driving decision logic based on the at least one group of information; and synchronizing the updated autonomous driving decision logic to the at least one vehicle, so that an autonomous driving system of the vehicle can determine a control decision for controlling autonomous driving of the vehicle based on the autonomous driving decision logic.

According to another aspect of the present disclosure, a control apparatus for autonomous driving is provided, the apparatus including: an obtaining unit configured to obtain perception information of road conditions around a vehicle; a determination unit configured to determine a first control decision based on the perception information and autonomous driving decision logic; and a control unit configured to control the vehicle to perform autonomous driving according to the first control decision, where the determination unit is further configured to determine, in response to detecting an assisted driving instruction, a second control decision that is different from the first control decision based on the perception information, the autonomous driving decision logic, and the assisted driving instruction, and where the control unit is further configured to control the vehicle to perform autonomous driving according to the second control decision.

According to another aspect of the present disclosure, an update apparatus for autonomous driving decision logic is provided, the apparatus including: a receiving unit configured to receive at least one group of information from at least one vehicle, respectively, where each group of information comprises and a control decision of a corresponding vehicle, where the control decision in each group of information is determined by an autonomous driving system of a corresponding vehicle in response to detecting an assisted driving instruction; an update unit configured to update autonomous driving decision logic based on the at least one group of information; and a transmission unit configured to synchronize the updated autonomous driving decision logic to the at least one vehicle.

According to another aspect of the present disclosure, an electronic device is provided, including: at least one processor; and a memory communicatively connected to the at least one processor, where the memory stores instructions executable by the at least one processor, and when executed by the at least one processor, the instructions cause the at least one processor to perform the control method for autonomous driving and the update method for autonomous driving decision logic described above.

According to another aspect of the present disclosure, a computer-readable storage medium including instructions which, when executed by a computer, cause the computer to carry out the control method for autonomous driving and the update method for autonomous driving decision logic described above.

According to another aspect of the present disclosure, a computer program product including instructions which, when the program is executed by a computer, cause the computer to carry out the control method for autonomous driving and the update method for autonomous driving decision logic described above are implemented.

According to one or more embodiments of the present disclosure, during autonomous driving of a vehicle, when an assisted driving instruction is detected, a control decision is redetermined and autonomous driving of the vehicle is controlled according to the control decision, such that the control decision is adjusted by an autonomous driving system under non-takeover intervention of a safety officer. This improves the intelligence of the autonomous driving system and the interactivity with the safety officer, while avoiding suspension of an autonomous driving task caused by takeover intervention of the safety officer, and inconvenience brought by the need to completely stop the vehicle to restart the autonomous driving task after a takeover.

It should be understood that the content described in this section is not intended to identify critical or important features of the embodiments of the present disclosure, and is not used to limit the scope of the present disclosure. Other features of the present disclosure will be easily understood through the following description.

**BRIEF DESCRIPTION OF THE DRAWINGS**

The drawings exemplarily show embodiments and form a part of the specification, and are used to explain example implementations of the embodiments together with a written description of the specification. The embodiments shown are merely for illustrative purposes and do not limit the scope of the claims. Throughout the drawings, identical reference signs denote similar but not necessarily identical elements.

Fig. 1 is a schematic diagram of an example system in which various methods described herein can be implemented according to an embodiment of the present disclosure;

Fig. 2 is a flowchart of a control method for autonomous driving according to an example embodiment of the present disclosure;

Figs. 3A to 3C each are a schematic diagram of an assisted driving instruction instructing a traveling speed of a vehicle to be adjusted according to an example embodiment of the present disclosure;

Figs. 4A to 4C each are a schematic diagram of an assisted driving instruction instructing a traveling road of a vehicle to be adjusted according to an example embodiment of the present disclosure;

Figs. 5A to 5B each are a schematic diagram of an assisted driving instruction instructing an availability status of a surrounding road of a vehicle to be adjusted according to an example embodiment of the present disclosure;

Fig. 6 is a schematic diagram of generating an extrication trajectory according to an example embodiment of the present disclosure;

Fig. 7 is a flowchart of an update method for autonomous driving decision logic according to an example embodiment of the present disclosure;

Fig. 8 is a flowchart of updating autonomous driving decision logic according to an example embodiment of the present disclosure;

Fig. 9 is a structural block diagram of a control apparatus for autonomous driving according to an example embodiment of the present disclosure;

Fig. 10 is a structural block diagram of an update apparatus for autonomous driving decision logic according to an example embodiment of the present disclosure; and

Fig. 11 is a structural block diagram of an example electronic device that can be used to implement an embodiment of the present disclosure.

**DETAILED DESCRIPTION**

Example embodiments of the present disclosure are described below in conjunction with the accompanying drawings, where various details of the embodiments of the present disclosure are included to facilitate understanding, and should only be considered as examples. Therefore, those of ordinary skill in the art should be aware that various changes and modifications can be made to the embodiments described herein, without departing from the scope of the present disclosure. Likewise, for clarity and conciseness, description of well-known functions and structures are omitted in the following descriptions.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

It should be understood that the term "vehicle" or other similar terms used herein generally include motor vehicles, such as passenger vehicles including sedan cars, sport utility vehicles (SUVs), buses, vans, and various commercial vehicles, include boats, ships, aircraft, or the like, and include hybrid vehicles, electric vehicles, plug-in hybrid electric vehicles, hydrogen powered vehicles, and other alternative fuel vehicles (e.g., fuels derived from sources other than petroleum).

As used herein, the phrase "vehicle system/vehicle-mounted system" refers to an integrated information system with information processing capabilities. These systems are sometimes referred as in-vehicle information systems and are often integrated with remote information communication services, vehicle sensors, entertainment systems and/or navigation systems.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the related technology, according to an existing control method for an autonomous driving vehicle, if a safety officer expects to intervene in an autonomous driving behavior, he/she needs to take over the driving completely by means of direct control of a steering wheel, a brake pedal/accelerator pedal, and the like. Such an operation leads to suspension of an autonomous driving task, while restarting the autonomous driving task requires the vehicle to come to a complete standstill.

To solve the problems described above, in the present disclosure, during autonomous driving of a vehicle, when an assisted driving instruction is detected, a control decision is redetermined and autonomous driving of the vehicle is controlled according to the control decision, such that the control decision is adjusted by an autonomous driving system under non-takeover intervention of a safety officer. This improves the intelligence of the autonomous driving system and the interactivity with the safety officer, while avoiding suspension of an autonomous driving task caused by takeover intervention of the safety officer, and inconvenience brought by the need to completely stop the vehicle to restart the autonomous driving task after a takeover.

Embodiments of the present disclosure will be described below in detail in conjunction with the drawings.

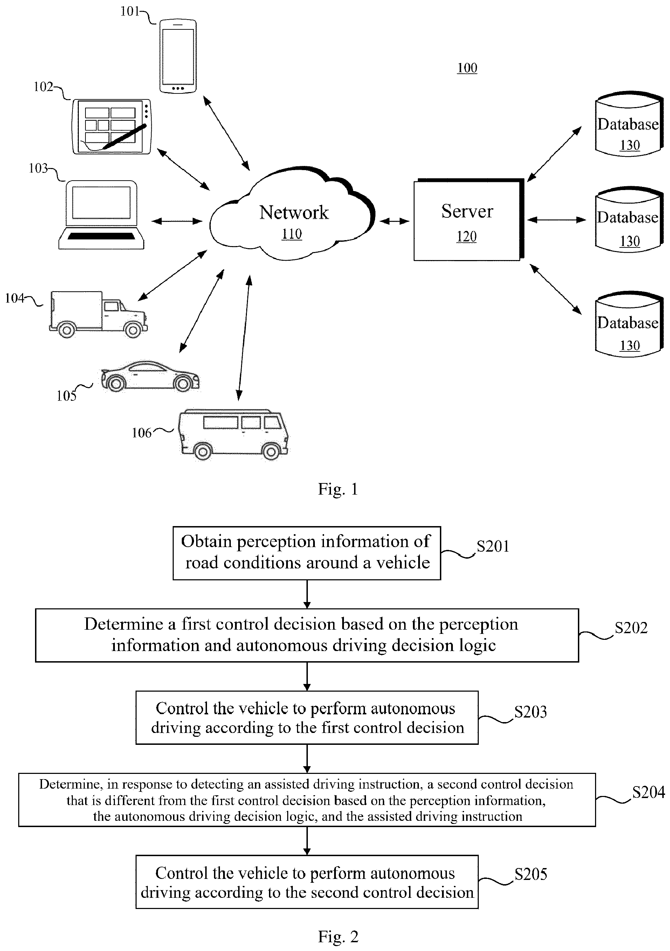

Fig. 1 is a schematic diagram of an example system 100 in which various methods and apparatuses described herein can be implemented according to an embodiment of the present disclosure. Referring to Fig. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a method for planning an autonomous driving path, a method for determining an autonomous driving control decision, an update method for autonomous driving decision logic, and the like, to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in Fig. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. The client device 101, 102, 103, 104, 105 and/or 106 may alternatively interact with the server 120 without direct user involvement. It should be understood that various system configurations are possible, which may be different from the system 100. Therefore, Fig. 1 is an example of the system for implementing various methods described herein, and is not intended to be limiting.

The client device 101, 102, 103, 104, 105 and/or 106 may interact with the server to obtain the autonomous driving path, the autonomous driving control decision, the autonomous driving decision logic, and the like. The client device may provide an interface that enables the user of the client device to interact with the client device. The client device may also output information to the user via the interface. Although Fig. 1 depicts only six types of client devices, those skilled in the art will understand that any number of client devices are possible in the present disclosure.

The client device 101, 102, 103, 104, 105, and/or 106 may include various types of computer devices, such as on-board computers applied to different types of vehicles, a portable handheld device, a general-purpose computer (such as a personal computer and a laptop computer), a workstation computer, various messaging devices, and a sensor or other sensing devices. These computer devices can run various types and versions of software application programs and operating systems, such as Microsoft Windows, Apple iOS, a UNIX-like operating system, and a Linux or Linux-like operating system (e.g., Google Chrome OS); or include various mobile operating systems, such as Microsoft Windows Mobile OS, iOS, Windows Phone, and Android. The portable handheld device may include a cellular phone, a smartphone, a tablet computer, a personal digital assistant (PDA), etc. The wearable device may include a head-mounted display and other devices. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a mid-terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from the client devices 101, 102, 103, 104, 105, and 106. The server 120 may further include one or more application programs to display the data feeds and/or real-time events via one or more display devices of the client devices 101, 102, 103, 104, 105, and 106.

In some implementations, the server 120 may be a server of a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The data repository 130 may reside in various locations. For example, a data repository used by the server 120 may be locally in the server 120, or may be remote from the server 120 and may communicate with the server 120 via a network-based or dedicated connection. The data repository 130 may be of different types. In some embodiments, the data repository used by the server 120 may be a database, such as a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of Fig. 1 may be configured and operated in various manners, such that the various methods and apparatuses described according to the present disclosure can be applied.

According to an aspect of the present disclosure, a computer-implemented control method for autonomous driving is provided. As shown in Fig. 2, the control method includes: step S201, obtaining perception information of road conditions around a vehicle; step S202, determining a first control decision based on the perception information and autonomous driving decision logic; step S203, controlling the vehicle to perform autonomous driving according to the first control decision; step S204, determining, in response to detecting an assisted driving instruction, a second control decision that is different from the first control decision based on the perception information, the autonomous driving decision logic, and the assisted driving instruction; and step S205, controlling the vehicle to perform autonomous driving according to the second control decision. In this way, during autonomous driving of a vehicle, when an assisted driving instruction is detected, a control decision is redetermined and autonomous driving of the vehicle is controlled according to the control decision, such that the control decision is adjusted by an autonomous driving system under non-takeover intervention of a safety officer. This improves the intelligence of the autonomous driving system and the interactivity with the safety officer, while avoiding suspension of an autonomous driving task caused by takeover intervention of the safety officer, and inconvenience brought by the need to completely stop the vehicle to restart the autonomous driving task after a takeover.

According to some embodiments, step S201 of obtaining perception information around a vehicle may include obtaining, by various sensors on the vehicle, traveling state information of the vehicle and road condition information around the vehicle, or may include obtaining, through Internet of Vehicles, road condition information and other traffic-related information perceived by other vehicles or obtaining, through communication with a road side unit, road condition information and other traffic-related information perceived by the road side unit. This is not limited herein.

According to some embodiments, the autonomous driving decision logic used in step S202 may be, for example, an autonomous driving algorithm applied in an autonomous driving system of a vehicle, or an autonomous driving algorithm on a server in the cloud. A control decision for controlling a vehicle in an autonomous driving state may be determined by using the autonomous driving decision logic. In some embodiments, based on the perception information and the autonomous driving decision logic, the control decision for the vehicle may be further determined based on high-precision map data, so as to achieve more accurate autonomous driving of the vehicle.

According to some embodiments, in step S203, autonomous driving of the vehicle is controlled according to the first control decision determined based on the perception information and the autonomous driving decision logic. It should be noted that the first control decision is an autonomous driving control decision made by the autonomous driving system on the basis of not receiving any instruction from a driver or a safety officer.

According to some embodiments, in step S204, in response to detecting the assisted driving instruction, the second control decision that is different from the first control decision is determined based on the perception information, the autonomous driving decision logic, and the assisted driving instruction. In some embodiments, the detected assisted driving instruction indicates at least one of the following operations: adjusting a traveling speed of the vehicle; adjusting a traveling lane of the vehicle; and adjusting an availability status of a surrounding road of the vehicle, the availability status being capable of indicating whether the surrounding road is available for the vehicle to travel. In this way, through the above-mentioned assisted driving instruction indicating three different operations, the autonomous driving system may complete three tasks of speed change, lane change, and extrication/obstacle avoidance under the intervention of the safety officer, and maintain the autonomous driving state, thereby achieving a hybrid decision to the vehicle made by the autonomous driving system and the safety officer.

The above three tasks will be described in detail below in conjunction with several example embodiments.

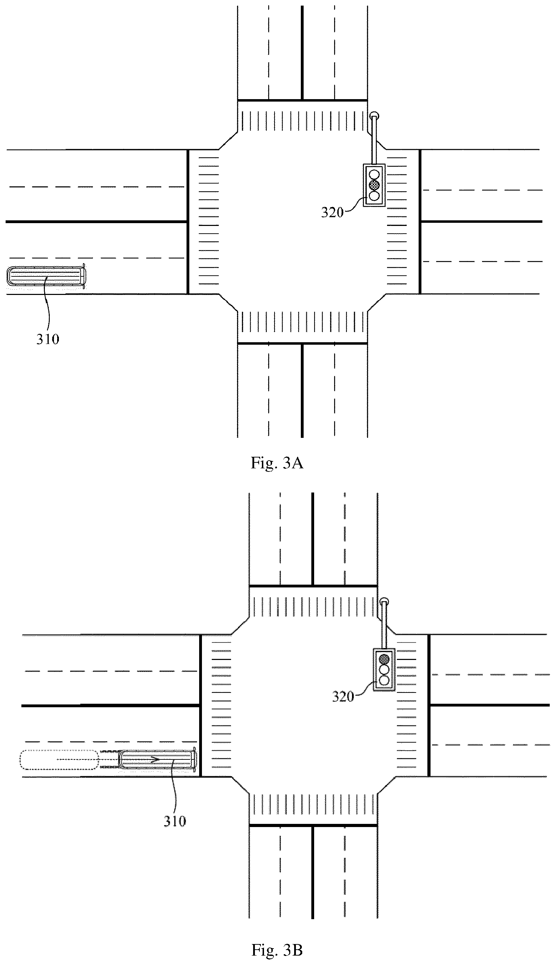

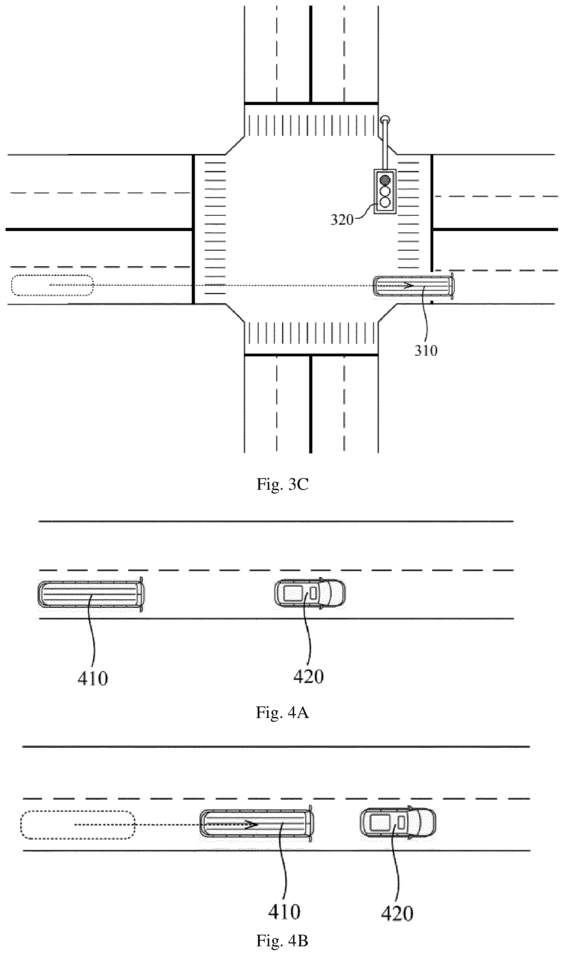

Figs. 3A to 3C each show an example embodiment of the assisted driving instruction instructing the traveling speed of the vehicle to be adjusted. As shown in Fig. 3A, as a vehicle 310 travels to a location close to a crossroads, the vehicle 310 obtains perception information that a traffic light 320 is yellow and determines braking as the first control decision based on the perception information. However, as shown in Fig. 3B, applying emergency braking in this case will generate a very large reverse acceleration, and although it is possible to stop before a stop line, it will cause a relatively poor riding experience to passengers in the vehicle and may even cause a safety hazard. Thus, the safety officer of the vehicle 310 may give the assisted driving instruction to increase the traveling speed of the vehicle such that the vehicle crosses a stop line during the yellow light and almost exits the crossroads as the traffic light turns red. As shown in Fig. 3C, after receiving the assisted driving instruction, an autonomous driving system of the vehicle 310 determines a second control decision "accelerate through the crossroads" different from "brake".

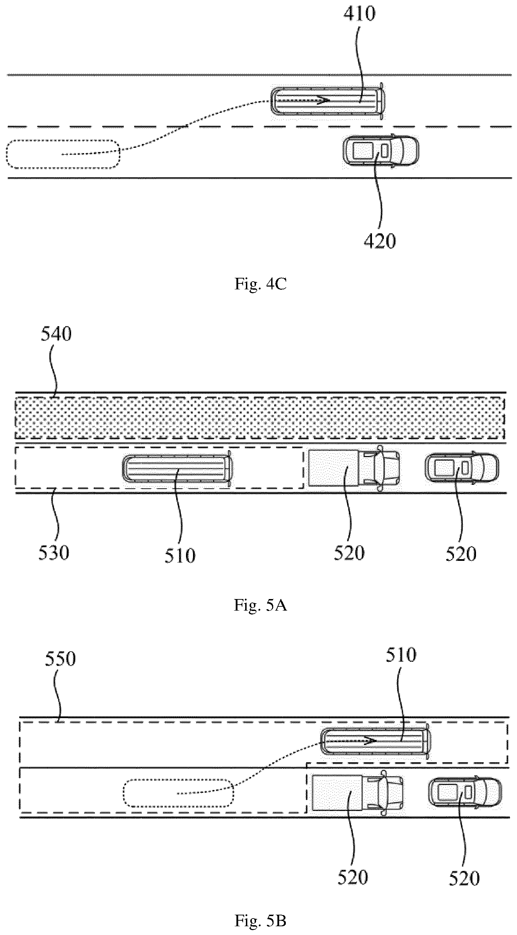

Figs. 4A to 4C each show an example embodiment of the assisted driving instruction instructing the traveling road of the vehicle to be adjusted. As shown in Fig. 4A, a vehicle 420 travels slowly in the same lane ahead of a vehicle 410. An autonomous driving system of the vehicle 410 determines the first control decision to follow the vehicle ahead. However, since the vehicle 420 is traveling relatively slowly, a decision to follow the vehicle ahead, although safe, may seriously affect a traveling speed of the vehicle 410. In addition, as shown in Fig. 4B, after the decision to follow the vehicle ahead is executed, a distance between the vehicle 410 and the vehicle 420 is shortened. If the vehicle 410 makes decision to change lanes at this moment, it can only change lanes directly to the left or decelerate before changing lanes to the left. However, changing lanes directly to the left may lead to a traffic hazard, and decelerating before changing lanes to the left may have a certain impact on the riding experience of passengers in the vehicle. Thus, the safety officer of the vehicle 410 may give an assisted driving instruction to adjust the traveling lane to the left in advance. As shown in Fig. 4C, after receiving the assisted driving instruction, the autonomous driving system of the vehicle 410 determines a second control decision "change lanes to the left" different from "follow the vehicle ahead".

Figs. 5A to 5B each show an example embodiment of the assisted driving instruction instructing an availability status of a surrounding road of the vehicle to be adjusted.

According to some embodiments, for example, under the task of extrication, adjusting the availability status of the surrounding road of the vehicle may include: adjusting the availability status of the surrounding road of the vehicle from unavailable to available. The surrounding road of the vehicle may include at least one of the following: an opposite lane, a lane separated by a lane-changing-inhibited line, a lane different from a traveling direction of the vehicle, an emergency lane, an on-street parking spot, and a non-lane road. In this way, under special circumstances, in response to receiving an instruction from the safety officer to adjust the availability status of the surrounding road the vehicle, the vehicle may use, for extrication, the surrounding road that is unavailable under normal conditions, thereby improving flexibility of autonomous driving. Since the safety officer does not take over the driving and the autonomous driving task is not suspended, there is no need to stop the vehicle and restart the autonomous driving system, which improves the intelligence of the autonomous driving system.

In an example embodiment, the traveling direction of the vehicle is forward, and a left turn lane and a right turn lane are lanes that are different from the traveling direction of the vehicle. In another example embodiment, the non-lane road may include, for example, road shoulders and ground scribed areas (e.g., scribed areas near ramp entrances). It may be understood that the surrounding road of the vehicle may further include more types of roads or even non-roads, which are all within the scope of protection of the present disclosure.

In an example embodiment, as shown in Fig. 5A, there is blockage in front of a vehicle 510, a plurality of vehicles 520 are parked in the forward lane, and an autonomous driving system of the vehicle 510 determines "stop and wait" as the first control decision. In addition, an availability status of a surrounding road 530 of the vehicle 510 is available, and an availability status of an opposite road 540 is unavailable. At this time, the safety officer receives, for example, an instruction from the traffic police, indicating that the opposite lane may be used for extrication, and the safety officer may give an assisted driving instruction to adjust the availability status of the opposite road 540 to available. As shown in Fig. 5B, after receiving this instruction, the vehicle 510 uses an updated available road 550 to determine the second control decision "change lanes to the left for extrication".

According to some embodiments, for example, under the task of obstacle avoidance, adjusting the availability status of the surrounding road of the vehicle may include, for example: adjusting the availability status of the surrounding road of the vehicle from available to unavailable. For example, for various reasons such as traffic accidents, traffic control, and road maintenance, there are obstacles on the available road around the vehicle, and a sensing device or the autonomous driving system of the vehicle may fail to identify these obstacles in time due to blind spots, inconspicuous obstacles, and the like. In such cases, the safety officer may adjust the availability status of these roads from available to unavailable via assisted driving instructions, thus preventing the vehicle from entering dangerous roads under the control of the autonomous driving system. Since the safety officer does not take over the driving and the autonomous driving task is not suspended, there is no need to stop the vehicle and restart the autonomous driving system, which improves the intelligence of the autonomous driving system.

According to some embodiments, step S204 of determining a second control decision that is different from the first control decision may include: in response to detecting the assisted driving instruction capable of instructing the availability status of the surrounding road of the vehicle to be adjusted, determining a target location in a surrounding road available to the vehicle; and determining the second control decision based on a current location of the vehicle, the target location, and the availability status of the surrounding road of the vehicle. In this way, after detecting an instruction to change the availability status of the surrounding road, the autonomous driving system first determines the target location in the surrounding road, and then generates an extrication/obstacle avoidance path based on the current location, the target location, and the available area. In this way, the safety officer only needs to make an instruction to change the availability status of the surrounding road, and the autonomous driving system may implement autonomous extrication/obstacle avoidance, thereby reducing operational requirements on the safety officer and enhancing the intelligence of the autonomous driving system.

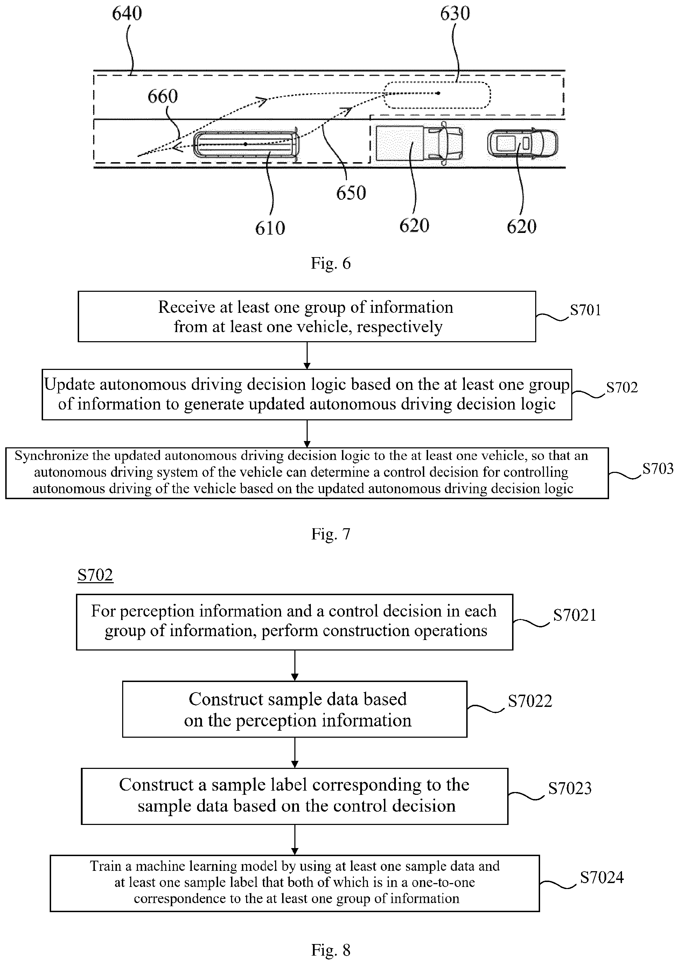

In an example embodiment, as shown in Fig. 6, an initial location of the vehicle is 610, and there are a plurality of stopped vehicles 620 in front of the vehicle. The available surrounding road 640, where the target location 630 for vehicle extrication is determined, is determined in response to detecting the assisted driving instruction for adjusting the availability status of the surrounding road. Based on the initial position 610 and the target location 630, a suitable extrication trajectory and the corresponding second control decision may be determined based on whether reverse is allowed or not. More specifically, a Dubins curve-based extrication trajectory 650 may be generated in the case where the reverse is not allowed, and a Reeds-Shepp curve-based extrication trajectory 660 may be generated in the case where the reverse is allowed.

According to some embodiments, the above-mentioned extrication trajectory may be generated based on a Hybrid A* algorithm. A path evaluation function may be, for example:

$$Cost = G + H$$

Here, G is the cost of moving from a starting point to a specified position, while H is the cost of moving from the specified position to an end point. Each of G and H may also include the cost of corresponding path length, the cost of traveling direction switching, the cost of gear switching, the cost of steering wheel turning angle, and the like, which are not limited herein. By combining the Hybrid A* algorithm and the path evaluation function, respective optimal extrication trajectories may be obtained for the two scenarios in which the reverse is allowed and not allowed. It may be understood that those skilled in the art may also use other curves as an extrication trajectory or generate an extrication trajectory by using other algorithms, which are not limited herein. Generation of the obstacle avoidance trajectory is similar to the generation of the extrication trajectory. Details are not described herein again.

According to some embodiments, the assisted driving instruction may include at least one of: a gesture, a voice command, a physical key triggering, and a virtual key triggering. In some example embodiments, physical keys may include, for example, physical operable keys such as buttons, switches, toggles, and knobs in the vehicle, and virtual keys may include, for example, virtual operable keys such as buttons, switches, toggles, and knobs on a touch screen in the vehicle, which are not limited herein.

The form of the assisted driving instruction and the operations that the instruction may indicate will be described below with several example embodiments.

In some example embodiments, for the assisted driving instruction that can instruct the traveling speed of the vehicle to be adjusted, a physical key such as a deceleration button or a deceleration pedal may be provided, where pressing the key indicates intervention to decelerate the vehicle, magnitude of the pressing indicates a deceleration force, and duration of the pressing indicates intervention duration of the deceleration. Similarly, a physical key such as an acceleration button or accelerator pedal may be provided. Details are not repeated herein. In other example embodiments, a virtual key such as an on-screen virtual deceleration button may be provided, where pressing the key indicates intervention to decelerate the vehicle, magnitude of the pressing indicates a deceleration force, and duration of the pressing indicates intervention duration of the deceleration. Similarly, a virtual key such as an on-screen virtual acceleration button may be provided. Details are not repeated herein.

In some example embodiments, for the assisted driving instruction that can instruct the traveling lane of the vehicle to be adjusted, a physical key such as a lane changing button or a lane changing toggle may be provided. Exemplarily, a steering toggle has three positional states: up, middle, and down. When the toggle is in the middle location, there is no intervention instruction; and when the toggle is in the up or down location, the assisted driving instruction to adjust the lane to the right or to adjust the lane to the left is triggered. In other example embodiments, a virtual key such as a virtual lane changing button or a virtual toggle may be provided, operations of which may be similar to that of the physical key and will not be described herein.

In some example embodiments, for the assisted driving instruction that can instruct the availability status of the surrounding road of the vehicle to be adjusted, a corresponding physical key or on-screen virtual key may be provided. Exemplarily, the safety officer may adjust the availability status of the surrounding road of the vehicle by indicating or drawing, on a display of an on-board electronic device by operating a physical key or an on-screen virtual key, a road where the availability status is expected to be switched.

In some example embodiments, alternatively, a gesture may be recorded via an in-vehicle camera or a voice command may be recorded via a voice collection device, and the instruction is then recognized by an electronic device such as an on-board computer, to perform corresponding speed changing, lane changing, and extrication/obstacle avoidance tasks.

According to some embodiments, the control method may further include updating the autonomous driving decision logic based on the perception information of the vehicle and the second control decision. In this way, the second control decision that is based on the assisted driving instruction and the corresponding perception information are collected on the vehicle side, to update the autonomous driving decision logic, so that the driving logic of the vehicle more conforms to driving habits of the safety officer, thus improving the reliability, reasonableness, and safety of the autonomous driving decision.

According to some embodiments, the control method may further include sending the perception information and the second control decision to a server; and synchronizing autonomous driving decision logic from the server. In this way, the second control decision that is based on the assisted driving instruction and the corresponding perception information that are collected on the vehicle side are sent to the server, so that the server may collect a large amount of data of the intervention of the safety officer in the autonomous driving, thus optimizing the autonomous driving system by using richer driving data and synchronizing the updated autonomous driving decision logic to each autonomous driving vehicle, and further improving the reliability, reasonableness, and safety of the autonomous driving decision.

According to another aspect of the present disclosure, a computer-implemented update method for autonomous driving decision logic is further provided. As shown in Fig. 7, the update method includes: step S701, receiving at least one group of information from at least one vehicle, respectively, where each group of information includes perception information and a control decision of a corresponding vehicle, where the control decision in each group of information is determined by an autonomous driving system of a corresponding vehicle in response to detecting an assisted driving instruction;

step S702, updating autonomous driving decision logic based on the at least one group of information; and step S703, synchronizing the updated autonomous driving decision logic to the at least one vehicle, so that an autonomous driving system of the vehicle can determine a control decision for controlling autonomous driving of the vehicle based on the autonomous driving decision logic. In this way, the autonomous driving decision logic is updated by using the control decision made by the autonomous driving system after detecting the assisted driving instruction and the corresponding perceived data that are sent back by the vehicles, and the updated autonomous driving decision logic is synchronized to each vehicle, these vehicles can make control decisions closer to the safety officer when facing similar scenarios in the future.

According to some embodiments, as shown in Fig. 8, step S702 of updating autonomous driving decision logic based on the at least one group of information may include: step S7021, for perception information and a control decision in each group of information, performing construction operations; step S7022, constructing sample data at least by using the perception information; step S7023, constructing a sample label corresponding to the sample data by using the control decision; and step S7024, training a machine learning model by using at least one sample data and at least one sample label that both of which is in a one-to-one correspondence to the at least one group of information. Step S703 of synchronizing the updated autonomous driving decision logic to the at least one vehicle may include synchronizing the machine learning model to the at least one vehicle. In this way, sample data and sample labels for training samples are constructed by using the perception information and the control decision, and these training samples are trained by using a machine learning model, and then the trained machine learning model, i.e., the updated autonomous driving decision logic, may be obtained. By using machine learning methods, it is possible to better learn the driving habits of the safety officers, which further improves the reliability and safety of the updated autonomous driving decision logic.

According to some embodiments, steps S7022 and S7023 may be, for example, sub-steps of the construction operation described in step S7021.

According to some embodiments, an input to the above machine learning model may include, for example, feature data generated based on the perception information (e.g., traveling information of the vehicle such as vehicle location, attitude, speed, and acceleration, and obstacle information such as a vehicle on the road, an obstacle and its corresponding location, speed, and acceleration), map data information (e.g., lane ID, width, and forward/backward distance), autonomous driving task information (e.g., starting point, end point, and passing point of the autonomous driving task), and an assisted driving instruction. When training the machine learning model and using the machine learning model for prediction, if there is no corresponding information, features of this part may be filled (for example, zero-filled). Exemplarily, when the above-mentioned machine learning model is trained by using the second control decision determined after the intervention of the safety officer and the perceived data, feature values related to the assisted driving instructions may be zero-filled, so that the trained machine learning model may also make control decisions that conform to the driving habits of the safety officer in the absence of assisted driving instructions.

In other embodiments, the input to the above machine learning model may alternatively not include an assisted driving instruction. In this case, a post-processing method may be used to combine the first control decision generated by the machine learning model with the assisted driving instruction to obtain the second control decision. In addition, an additional machine learning model dedicated to use when the assisted driving instruction is detected may also be trained, so that when an intervention instruction from the safety officer is detected, this additional machine learning model may be used to generate control decisions.

It may be understood that those skilled in the art may use richer ways to implement the method of using machine learning or other methods to update the autonomous driving decision logic based on the control decision made under the intervention of the safety officer and the perception information, which are not limited herein.

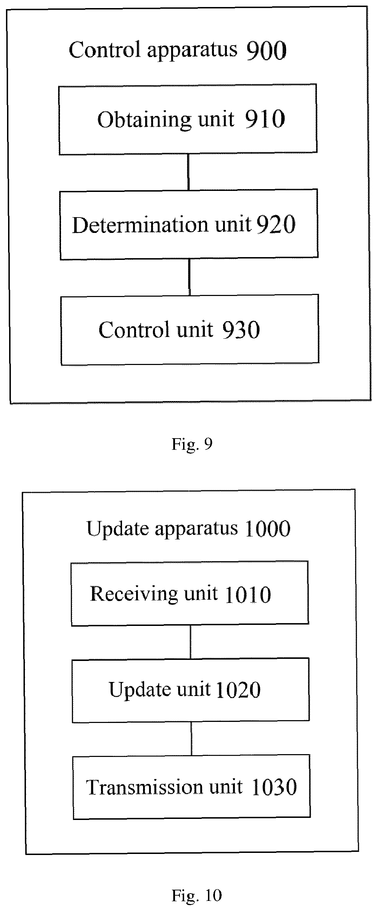

According to another aspect of the present disclosure, a control apparatus for autonomous driving is further provided. As shown in Fig. 9, a control apparatus 900 includes: an obtaining unit 910 configured to obtain perception information of road conditions around a vehicle; a determination unit 920 configured to determine a first control decision based on the perception information and autonomous driving decision logic; and a control unit 930 configured to control the vehicle to perform autonomous driving according to the first control decision, where the determination unit 920 is further configured to determine, in response to detecting an assisted driving instruction, a second control decision that is different from the first control decision based on the perception information, the autonomous driving decision logic, and the assisted driving instruction, and where the control unit 930 is further configured to control the vehicle to perform autonomous driving according to the second control decision.

Operations of the units 910 to 930 of the control apparatus 900 are similar to operations of steps S201 to S205 of the above-mentioned control method. Details are not described herein again.

According to some embodiments, the assisted driving instruction indicates at least one of the following operations: adjusting a traveling speed of the vehicle; adjusting a traveling lane of the vehicle; and adjusting an availability status of a surrounding road of the vehicle, the availability status indicating whether the surrounding road is available for the vehicle to travel.

According to some embodiments, the assisted driving instruction may include at least one of: a gesture, a voice command, a physical key triggering, and a virtual key triggering.

According to some embodiments, the adjusting an availability status of a surrounding road of the vehicle may include: adjusting the availability status of the surrounding road of the vehicle from unavailable to available, and where the surrounding road of the vehicle includes at least one of the following: an opposite lane, a lane separated by a lane-changing-inhibited line, a lane different from a traveling direction of the vehicle, an emergency lane, an on-street parking spot, and a non-lane road.

According to some embodiments, the determination unit 920 may include: a first determination subunit configured to: in response to detecting the assisted driving instruction, determine a target location in a surrounding road available to the vehicle; and a second determination subunit configured to determine the second control decision based on a current location of the vehicle, the target location, and the availability status of the surrounding road of the vehicle.

According to some embodiments, the control apparatus 900 may further include: an update unit configured to update the autonomous driving decision logic based on the perception information of the vehicle and the second control decision.

According to some embodiments, the control apparatus 900 may further include: a sending unit configured to send the perception information and the second control decision to a server; and a synchronization unit configured to synchronize autonomous driving decision logic from the server.

According to another aspect of the present disclosure, an update apparatus for autonomous driving decision logic is further provided. As shown in Fig. 10, an update apparatus 1000 includes: a receiving unit 1010 configured to receive at least one group of information from at least one vehicle, respectively, where each group of information includes perception information and a control decision of a corresponding vehicle, where the control decision in each group of information is determined by an autonomous driving system of a corresponding vehicle in response to detecting an assisted driving instruction; an update unit 1020 configured to update autonomous driving decision logic based on the at least one group of information; and a transmission unit 1030 configured to synchronize the updated autonomous driving decision logic to the at least one vehicle.

Operations of the units 1010 to 1030 of the update apparatus 1000 are similar to operations of steps S701 to S703 of the above-mentioned update method. Details are not described herein again.

According to the embodiments of the present disclosure, an electronic device, a readable storage medium, and a computer program product are further provided.

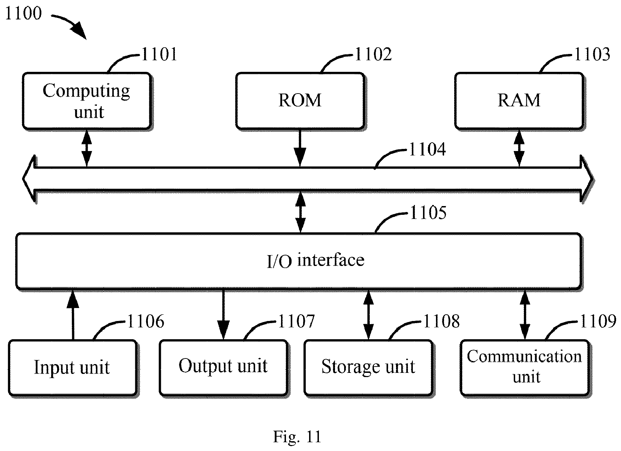

Referring to Fig. 11, a structural block diagram of an electronic device 1100 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in Fig. 11, the device 1100 includes a computing unit 1101, which may perform various appropriate actions and processing according to a computer program stored in a read-only memory (ROM) 1102 or a computer program loaded from a storage unit 1108 to a random access memory (RAM) 1103. The RAM 1103 may further store various programs and data required for the operation of the device 1100. The computing unit 1101, the ROM 1102, and the RAM 1103 are connected to each other through a bus 1104. An input/output (I/O) interface 1105 is also connected to the bus 1104.

A plurality of components in the device 1100 are connected to the I/O interface 1105, including: an input unit 1106, an output unit 1107, the storage unit 1108, and a communication unit 1109. The input unit 1106 may be any type of device capable of entering information to the device 1100. The input unit 1106 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1107 may be any type of device capable of presenting information, and may include, but is not limited to, a display, a speaker, a video/audio output terminal, a vibrator, and/or a printer. The storage unit 1108 may include, but is not limited to, a magnetic disk and an optical disc. The communication unit 1109 allows the device 1100 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, a 802.11 device, a Wi-Fi device, a WiMAX device, a cellular communication device, and/or the like.

The computing unit 1101 may be various general-purpose and/or special-purpose processing components with processing and computing capabilities. Some examples of the computing unit 1101 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1101 performs the various methods and processing described above, for example the control method for autonomous driving and/or the update method for autonomous driving decision logic. For example, in some embodiments, the control method for autonomous driving and/or the update method for autonomous driving decision logic may be implemented as a computer software program that is tangibly contained in a machine-readable medium, such as the storage unit 1108. In some embodiments, a part or all of the computer program may be loaded and/or installed onto the device 1100 via the ROM 1102 and/or the communication unit 1109. When the computer program is loaded onto the RAM 1103 and executed by the computing unit 1101, one or more steps of the control method for autonomous driving and/or the update method for autonomous driving decision logic described above can be performed. Alternatively, in other embodiments, the computing unit 1101 may be configured, by any other suitable means (for example, by means of firmware), to perform the control method for autonomous driving and/or the update method for autonomous driving decision logic.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, voice input, or tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server of a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the drawings, it should be appreciated that the methods, systems, and devices described above are merely example embodiments or examples, and the scope of the present disclosure is not limited by the embodiments or examples, but only defined by the appended authorized claims and equivalent scopes thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A computer-implemented control method for autonomous driving, comprising:

    obtaining (S201) perception information of road conditions around a vehicle;
    determining (S202) a first control decision based on the perception information and autonomous driving decision logic;
    controlling (S203) the vehicle to perform autonomous driving according to the first control decision;
    determining (S204), in response to detecting an assisted driving instruction, a second control decision that is different from the first control decision based on the perception information, the autonomous driving decision logic, and the assisted driving instruction; and

    controlling (S205) the vehicle to perform autonomous driving according to the second control decision.

2. The method according to claim 1, wherein the assisted driving instruction indicates at least one of the following operations:

    adjusting a traveling speed of the vehicle;
    adjusting a traveling lane of the vehicle; and
    adjusting an availability status of a surrounding road of the vehicle, the availability status indicating whether the surrounding road is available for the vehicle to travel.

3. The method according to claim 2, wherein the adjusting the availability status of the surrounding road of the vehicle comprises: adjusting the availability status of the surrounding road of the vehicle from unavailable to available,
    and wherein the surrounding road of the vehicle comprises at least one of the following: an opposite lane, a lane separated by a lane-changing-inhibited line, a lane different from a traveling direction of the vehicle, an emergency lane, an on-street parking spot, and a non-lane road.

4. The method according to claim 2, wherein the determining the second control decision that is different from the first control decision comprises:

    in response to detecting the assisted driving instruction, determining a target location in a surrounding road available to the vehicle; and
    determining the second control decision based on a current location of the vehicle, the target location, and the availability status of the surrounding road of the vehicle.

5. The method according to claim 1, wherein the assisted driving instruction comprises at least one of: a gesture, a voice command, a physical key triggering, and a virtual key triggering.

6. The method according to claim 1, further comprising: updating the autonomous driving decision logic based on the perception information of the vehicle and the second control decision.

7. The method according to claim 1, further comprising:

    sending the perception information and the second control decision to a server; and
    synchronizing autonomous driving decision logic from the server.

8. A computer-implemented update method for autonomous driving decision logic, comprising:

receiving (S701) at least one group of information from at least one vehicle, respectively, wherein each group of information comprises perception information and a control decision of a corresponding vehicle, wherein the control decision in each group of information is determined by an autonomous driving system of a corresponding vehicle in response to detecting an assisted driving instruction;

updating (S702) autonomous driving decision logic based on the at least one group of information; and

synchronizing (S703) the updated autonomous driving decision logic to the at least one vehicle, so that an autonomous driving system of the vehicle can determine a control decision for controlling autonomous driving of the vehicle based on the autonomous driving decision logic.

9. The method according to claim 8, wherein the updating autonomous driving decision logic based on the at least one group of information comprises:

for perception information and a control decision in each group of information,

constructing sample data at least by using the perception information; and
constructing a sample label corresponding to the sample data by using the control decision; and

training a machine learning model by using at least one sample data and at least one sample label that both of which is in a one-to-one correspondence to the at least one group of information,
wherein the synchronizing the updated autonomous driving decision logic to the at least one vehicle comprises:
synchronizing the machine learning model to the at least one vehicle.

10. A control apparatus (900) for autonomous driving, comprising:

an obtaining unit (910) configured to obtain perception information of road conditions around a vehicle;
a determination unit (920) configured to determine a first control decision based on the perception information and autonomous driving decision logic; and
a control unit (930) configured to control the vehicle to perform autonomous driving according to the first control decision,
wherein the determination unit is further configured to determine, in response to detecting an assisted driving instruction, a second control decision that is different from the first control decision based on the perception information, the autonomous driving decision logic, and the assisted driving instruction,
and wherein the control unit is further configured to control the vehicle to perform autonomous driving according to the second control decision.

11. The apparatus according claim 10, wherein the assisted driving instruction indicates at least one of the following operations:

adjusting a traveling speed of the vehicle;
adjusting a traveling lane of the vehicle; and
adjusting an availability status of a surrounding road of the vehicle, the availability status indicating whether the surrounding road is available for the vehicle to travel.

12. The apparatus according to claim 11, wherein the adjusting the availability status of the surrounding road of the vehicle comprises: adjusting the availability status of the surrounding road of the vehicle from unavailable to available,
and wherein the surrounding road of the vehicle comprises at least one of the following: an opposite lane, a lane separated by a lane-changing inhibited line, a lane different from a traveling direction of the vehicle, an emergency lane, an on-street parking spot, and a non-lane road.

13. An update apparatus (1000) for autonomous driving decision logic, comprising:

a receiving unit (1010) configured to receive at least one group of information from at least one vehicle, respectively, wherein each group of information comprises perception information and a control decision of a corresponding vehicle, wherein the control decision in each group of information is determined by an autonomous driving system of a corresponding vehicle in response to detecting an assisted driving instruction;
an update unit (1020) configured to update autonomous driving decision logic based on the at least one group of information; and
a transmission unit (1030) configured to synchronize the updated autonomous driving decision logic to the at least one vehicle.

14. A computer-readable storage medium comprising instructions which, when executed by a computer, cause the computer to carry out the method of any one of claims 1 to 9.

15. A computer program product comprising instructions

**EP 4 124 532 A2**

which, when the program is executed by a computer, cause the computer to carry out the method of any one of claims 1 to 9.

Fig. 1

| Obtain perception information of road conditions around a vehicle | S201 |

Determine a first control decision based on the perception information and autonomous driving decision logic — S202

Control the vehicle to perform autonomous driving according to the first control decision — S203

Determine, in response to detecting an assisted driving instruction, a second control decision that is different from the first control decision based on the perception information, the autonomous driving decision logic, and the assisted driving instruction — S204

Control the vehicle to perform autonomous driving according to the second control decision — S205

Fig. 2

320

310

Fig. 3A

320

310

Fig. 3B

320

310

Fig. 3C

410

420

Fig. 4A

410    420

Fig. 4B

410

Fig. 4C

540

530    510    520    520

Fig. 5A

550    510

520    520

Fig. 5B

Fig. 6

| Receive at least one group of information from at least one vehicle, respectively | S701 |

| Update autonomous driving decision logic based on the at least one group of information to generate updated autonomous driving decision logic | S702 |

| Synchronize the updated autonomous driving decision logic to the at least one vehicle, so that an autonomous driving system of the vehicle can determine a control decision for controlling autonomous driving of the vehicle based on the updated autonomous driving decision logic | S703 |

Fig. 7

S702

| For perception information and a control decision in each group of information, perform construction operations | S7021 |

| Construct sample data based on the perception information | S7022 |

| Construct a sample label corresponding to the sample data based on the control decision | S7023 |

| Train a machine learning model by using at least one sample data and at least one sample label that both of which is in a one-to-one correspondence to the at least one group of information | S7024 |

Fig. 8

Control apparatus 900

Obtaining unit 910

Determination unit 920

Control unit 930

Fig. 9

Update apparatus 1000

Receiving unit 1010

Update unit 1020

Transmission unit 1030

Fig. 10

1100

1101 Computing unit

1102 ROM

1103 RAM

1104

1105 I/O interface

1106 Input unit

1107 Output unit

1108 Storage unit

1109 Communication unit

Fig. 11